Europäisches Patentamt

European Patent Office

Office européen des brevets

(11) Publication number: **0 550 167 A2**

# EUROPEAN PATENT APPLICATION

(21) Application number: **92311194.2**

(22) Date of filing: **09.12.92**

(51) Int. Cl.⁵: **H02M 3/335**

(30) Priority: **23.12.91 US 811631**

(43) Date of publication of application:
**07.07.93 Bulletin 93/27**

(84) Designated Contracting States:
**DE FR GB IT NL**

(71) Applicant: **GENERAL ELECTRIC COMPANY**
**1 River Road**
**Schenectady, NY 12345(US)**

(72) Inventor: **Steigerwald, Robert Louis**
**3 Sandstone Drive**
**Burnt Hills, New York 12027(US)**

(74) Representative: **Lupton, Frederick et al**
**LONDON PATENT OPERATION, G.E.**
**TECHNICAL SERVICES Co. INC., Essex**
**House, 12/13 Essex Street**
**London WC2R 3AA (GB)**

(54) **High-band width point-of-load power supply.**

(57) A point-of-load power supply employs a linear series regulator between a dc source and a resonant forward converter to achieve high bandwidth and to minimize magnetic and energy-storage components. The linear series regulator is controlled by the power supply output voltage in such manner that the linear series regulator regulates the output voltage over a high bandwidth. In one embodiment, a capacitor-multiplying, dual resonant forward converter is employed wherein a relatively high-voltage, energy-storage capacitor is coupled in parallel between the input dc power source and the converter. The converter is controlled such that one of the transformers is always coupled to the output so that energy is stored on the relatively high-voltage side of the converter, and the value of the energy-storage capacitance is reduced. In distributed power systems wherein the dc input voltage is provided by another centralized power supply such that the dc input voltage is fairly well regulated, a low-overhead series regulator (e.g., an n-channel FET) can be used in order to further increase efficiency. Alternatively, the two switching devices of the dual resonant forward converter are controlled to function as the linear regulator, thus reducing the required number of power devices.

FIG. 1

### Related Application

This application is related to copending European Patent Application Serial No. (docket No. RD-21.773).

### Field of the Invention

The present invention relates generally to power supplies. More particularly, the present invention relates to a high-bandwidth, point-of-load power supply having minimal magnetic and energy-storage components and thus being suitable for low-profile embedded power supply applications.

### Background of the Invention

Conventional point-of-load power supplies for supplying relatively low-voltage loads (e.g., 5V dc) employ switching regulators or resonant converters to regulate output voltage. Disadvantageously, such output voltage regulation schemes have limited bandwidths at practical switching frequencies, necessitating the use of low-voltage energy-storage capacitance at the output of the low-voltage power supply. One particular type of point-of-load power supply employs a dual resonant forward converter, as described by L.F. Casey and M.F. Schlecht in "A High Frequency, Low Volume, Point-of-Load Power Supply for Distributed Power Systems, 1987 IEEE PESC, pp. 439-450. Casey and Schlecht use a switching regulator, i.e., a simple buck regulator, to regulate the voltage supplied to the dual resonant forward converter and thus regulate the output voltage. Unfortunately, such a switching regulator adds complexity, cost, and an additional magnetic component to the power supply. Moreover, the bandwidth that can be achieved using a switching regulator is limited to a fraction (e.g., 10%) of the switching frequency. Accordingly, it is desirable to provide a high-bandwidth pre-regulator in order to improve power supply response and to minimize the size of energy-storage capacitors. Furthermore, it is desirable to provide a high-bandwidth, point-of-load power supply having a minimal number of magnetic components such that the power supply may be implemented in a high-density, low-profile configuration which can be embedded with its load.

### Summary of the Invention

The invention is set forth in Claim 1.

A point-of-load power supply employs a linear series regulator between a dc source and a resonant forward converter to achieve high bandwidth and to minimize magnetic and energy-storage components. The linear series regulator is controlled by the power supply output voltage in such manner that the linear series regulator regulates the output voltage over a high bandwidth.

In one preferred embodiment, a dual resonant forward converter is employed wherein a relatively high-voltage, energy-storage capacitor $C_e$ is coupled in parallel between the input dc power source and the converter. The dual resonant forward converter includes a series combination of a first switching device and a primary winding of a first transformer coupled in parallel with the energy-storage capacitor and further includes a series combination of a second switching device and a primary winding of a second transformer coupled in parallel with the energy-storage capacitor. A secondary winding of each of the first and second transformers are coupled, via separate respective rectifying means, in parallel with a relatively low-voltage output filter capacitor. The first and second transformers each have substantially the same turns ratio N, where

$$N = \frac{N_{primary}}{N_{secondary}},$$

$N_{primary}$ being the number of primary turns and $N_{secondary}$ being the number of secondary turns, so that the effective equivalent output capacitance Ceo is represented as:

$$Ceo = N^2 Ce + Co,$$

where Co is a relatively small output filter capacitor. Hence, since the energy-storage capacitance Ce is multiplied by the square of the turns ratio N, the value and size of energy-storage capacitance Ce are substantially reduced for substantially the same amount of stored energy. Furthermore, the first and second transformers are controlled to have a substantially 50% duty cycle and to be substantially 180° out-of-phase. Hence, one of the transformers is always coupled to the output so that energy can be stored on the relatively high-voltage side of the converter. As a result, a smaller energy-storage capacitor is required than would be necessary for low-voltage energy storage.

In distributed power systems wherein the dc input voltage to the power supply is provided by another centralized power supply such that the dc input voltage is fairly well regulated, a low-overhead series regulator can be used in order to further increase efficiency. According to one preferred embodiment, such a low-overhead series regulator preferably comprises an n-channel field effect transistor (FET). A small auxiliary winding on one of the transformers is used to provide a gate drive voltage for the n-channel device which is higher than the drain voltage thereof, thus allowing very low overhead operation.

According to another alternative embodiment, the two switching devices of the dual resonant forward converter are controlled to function as the linear regulator, as well as the converter switching devices, thus reducing the required number of power devices.

## Brief Description of the Drawings

The features and advantages of the present invention will become apparent from the following detailed description of the invention when read with the accompanying drawings in which:

Figure 1 schematically illustrates a point-of-load power supply according to the present invention;

Figure 2 schematically illustrates a preferred embodiment of the power supply of Figure 1 including a low-overhead, linear, series regulator according to the present invention; and

Figure 3 schematically illustrates an alternative embodiment of a point-of-load power supply according to the present invention.

## Detailed Description of the Invention

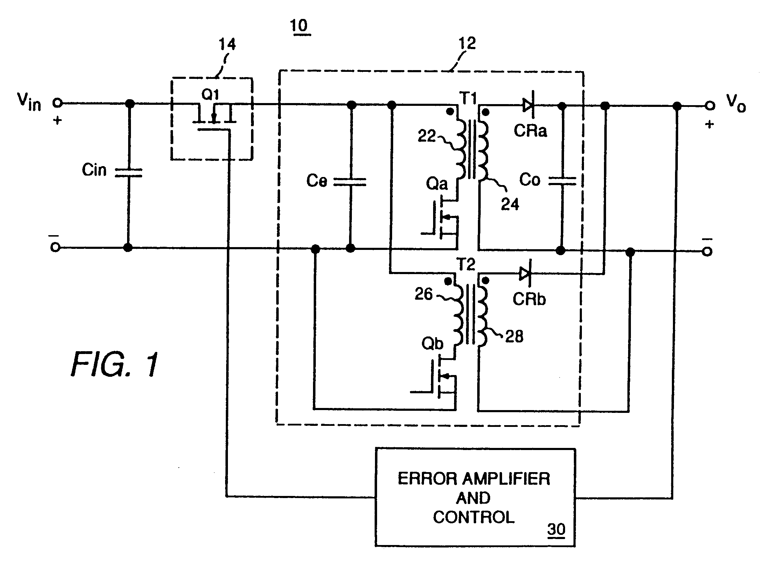

Figure 1 illustrates a point-of-load power supply 10 according to the present invention. A switching converter 12 provides voltage isolation and impedance transformation efficiently at high frequency. A linear series regulator 14 is coupled between an input filter capacitor Cin, which is coupled in parallel across a dc source input Vin, and resonant forward converter 12. Switching converter 12 is shown as comprising a capacitor-multiplying, dual resonant forward converter including a series combination of a first switching device Qa and a primary winding 22 of a first transformer T1 coupled in parallel with an energy-storage capacitor Ce. A secondary winding 24 of transformer T1 is coupled in parallel, via a diode rectifier CRa, to a small high-frequency output filter capacitor Co. Resonant converter 12 further includes a series combination of a second switching device Qb and a primary winding 26 of a second transformer T2 also coupled in parallel with energy-storage capacitor Ce. A secondary winding 28 of transformer T2 is coupled in parallel, via a diode rectifier CRb, to output filter capacitor Co. Transformers T1 and T2 have substantially the same turns ratio N. Switching devices Qa and Qb are illustrated as FET's; however, any suitable types of switching devices may be used.

Linear series regulator 14 is shown as comprising a series pass device Q1. In particular, linear series device 14 is illustrated as an FET; however, other suitable known types of linear series devices may be used, such as bipolar power transistors. In accordance with the present invention, linear series regulator 14 is controlled by feedback of the power supply output voltage Vo via an error amplifier and control 30. As a result, high speed linear operation over a high bandwidth is achieved, rather than the bandwidth-limiting operation of power supplies using conventional switching regulators. Hence, the required size of energy-storage capacitor Ce is reduced.

Dual resonant forward converter 12 is operated in a similar manner as the converter of European patent application, Serial No. _____ (docket no. RD-21, 773), cited hereinabove. In particular, switching devices Qa and Qb are gated 180° out-of-phase with a 50% duty cycle. Hence, because one of the switching devices is always conducting, the energy-storage capacitor Ce is always transformer-coupled to the dc output through either the combination of transformer T1 and rectifier CRa or the combination of transformer T2 and rectifier CRb. Hence, energy is stored on the relatively high voltage side of the converter. Moreover, output filter capacitor Co is used for filtering switching noise and hence is not required to store substantial energy. Output filter capacitor Co is thus relatively small as compared with energy-storage capacitor Ce. Therefore, through transformer action, the effective output capacitance Ceo is represented by:

$$Ceo = N^2 Ce + Co.$$

Such a power supply which stores energy at relatively high voltage, while maintaining a high bandwidth, is useful for supplying fast-rising pulsed loads, such as radar or VLSI loads. For an exemplary radar system, the energy-storage capacitor Ce is at approximately 100 or more volts, and the output filter capacitor $C_o$ is at approximately 5 to 9 volts. For this example, the transformer turns ratio N is 10:1 or greater. Hence, the energy-storage capacitance is multiplied by at least approximately 100. In addition, since the energy is stored at a higher voltage, the energy-storage capacitor is smaller for the same amount of stored energy.

In a distributed power system, the dc input voltage Vin is typically provided by another centralized power supply (not shown) such that the dc input voltage is fairly well regulated. Hence, the linear series regulator in a point-of-load supply in such a system is only required to regulate relatively small input voltage variations (e.g., a few percent) and any load variations. Therefore, to increase efficiency, a low-overhead series regulator may be employed across which there is a very low voltage drop. A conventional low overhead series regulator comprises a PNP bipolar transistor or a p-channel FET to achieve low-overhead operation since the gate drive voltage for such a device is lower than the input dc source voltage. On the other hand, n-channel series pass devices are typically not used because a gate-drive voltage higher than the input dc source voltage is required. Disadvantageously, however, p-channel and PNP devices are typically larger and have lower bandwidths than NPN or n-channel devices.

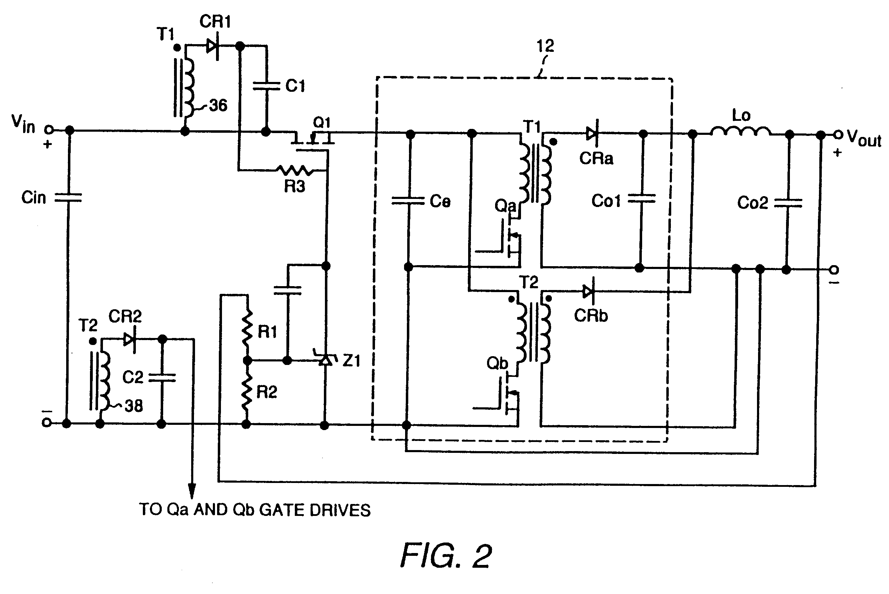

Figure 2 illustrates a point-of-load power supply employing a low-overhead, linear, series regulator according to the present invention. The output voltage Vout, taken across a capacitor Co2 of a high-frequency output filter, which comprises the series combination of an inductor Lo and capacitor Co2, is fed back to a shunt regulator Z1 (such as a type TL431 device manufactured by Texas Instruments, Inc.), via a resistive divider R1-R2, which compares the sampled output Vout to a reference set by shunt regulator Z1. In response, shunt regulator Z1, which is represented in Figure 2 as comprising an adjustable Zener diode, adjusts its cathode voltage (and hence the voltage at the gate of device Q1) to regulate the output voltage Vout. In order that the voltage drop across series pass device Q1 is low (e.g., 1 volt or less), the voltage at the gate of series pass device Q1 must be higher than the voltage at its drain. In accordance with the present invention, this gate voltage is provided, via a resistor R3, by a small auxiliary winding 36 on transformer T1. The voltage across auxiliary winding 36 is rectified by rectifier CR3 and filtered by a filter capacitor C1. Capacitor Cz, coupled between the cathode of Zener diode Z1 and the junction joining resistors R1 and R2, is a control loop stabilizing capacitor. In the implementation of Figure 2, power to supply the gate drivers (not shown) which drive Qa and Qb 180° out-of-phase and with a 50% duty cycle, as described hereinabove, is obtained from an auxiliary winding 38 on T2. Rectifier CR2 rectifies and capacitor C2 filters the voltage across auxiliary winding 38.

Advantageously, the method according to the present invention of controlling a series pass regulator, as described hereinabove, allows for the use of a small n-channel device Q1, thereby increasing the bandwidth of operation. Furthermore, such a small n-channel device requires less silicon in the manufacture thereof and is easier to integrate on a circuit chip.

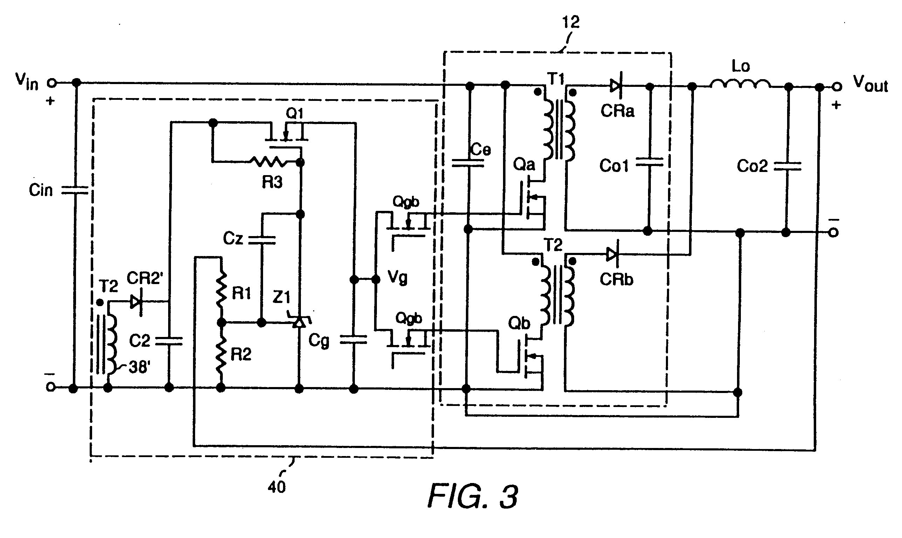

Figure 3 illustrates an alternative embodiment of a point-of-load power supply according to the present invention wherein the two switching devices Qa and Qb are controlled to function as a linear regulator as well as the converter switching devices. In particular, the gate drive voltage level for devices Qa and Qb is controlled by control block 40 such that the forward voltage drop across devices Qa and Qb is controlled to regulate the supply output voltage Vout. Gate drive switching devices Qga and Qgb are coupled to the gates of devices Qa and Qb, respectively, and are switched at a substantially 50% duty cycle and 180 degrees out-of-phase to drive the power FET's Qa and Qb. However, the magnitude of the gate-drive voltage for driving each of switching devices Qa and Qb is controlled by series pass device Q1 and shunt regulator Z1. In particular, the output voltage Vout is fed back to shunt Z1, via resistive divider R1-R2, in order to control the gate drive series pass device Q1, as described hereinabove with reference to Figure 2. A high-frequency filter capacitor Cg is coupled between the drain terminal of device Q1 and the negative terminal of dc source input Vin. Gate drive power is obtained from an auxiliary winding 38' on transformer T2 which is coupled to the source terminal of device Q1 via a rectifier CR2' and a filter capacitor C2'. As shown, the series combination of auxiliary winding 38', rectifier CR2' and capacitor C2' is coupled to the negative terminal of dc source input Vin. Thus, the gate-drive voltage is automatically adjusted by series pass device Q1 such that the voltage drop across switching devices Qa and Qb is controlled to regulate the output voltage Vout.

While the preferred embodiments of the present invention have been shown and described herein, it will be obvious that such embodiments are provided by way of example only. Numerous variations, changes and substitutions will occur to those of skill in the art without departing from the invention herein. Accordingly, it is intended that the invention be limited only by the scope of the appended claims.

## Claims

1. A power supply for providing a dc output voltage when coupled to a dc source voltage, comprising:

    switching converter means for providing voltage isolation and impedance transformation between said dc source voltage and said dc output voltage;

    linear regulator means for regulating said dc output voltage over a relatively high bandwidth, said linear regulator means being coupled in series between said dc source voltage and said switching converter means; and

    control means for feeding back said dc output voltage for controlling said linear regulator means to regulate said dc output voltage.

2. The power supply of claim 1 wherein said linear regulator means comprises a linear series pass device.

3. The power supply of claim 2 wherein said linear series pass device comprises an n-channel transistor, said control means controlling operation of said linear series pass device such that the gate voltage thereof is greater than the drain voltage thereof.

4. The power supply of claim 1 wherein said switching converter means comprises at least one switching device, at least one switching device of said switching converter means comprising said linear regulator means, the gate drive voltage of said switching device being controlled to adjust the forward voltage drop across said switching device in order to regulate said output voltage.

5. The power supply of claim 1 wherein said switching converter means comprises a capacitor-multiplying converter, said capacitor-multiplying converter including an energy-storage capacitance Ce for coupling to said dc source voltage and an output filter capacitance Co, said capacitor-multiplying converter further including a primary winding of at least one transformer coupled to said energy-storage capacitance, said transformer having a turns ratio N;

whereby the equivalent output capacitance Ceo of said converter is given by the expression:

$$Ceo = N^2 Ce + Co.$$

6. The power supply of claim 5 wherein said linear regulator means comprises a linear series pass device.

7. The power supply of claim 6 wherein said converter further comprises an auxiliary winding on said transformer, the voltage induced across said auxiliary winding providing the gate drive power to said linear series pass device.

8. The power supply of claim 6 wherein said linear series pass device comprises an n-channel transistor, said control means controlling operation of said linear series pass device such that the gate voltage thereof is greater than the drain voltage thereof.

9. The power supply of claim 8 wherein said converter further comprises an auxiliary winding on said transformer, the voltage induced across said auxiliary winding providing the gate drive power to said linear series pass device.

10. The power supply of claim 1 wherein said switching converter means comprises a resonant converter.

11. The power supply of claim 10 wherein said linear regulator means comprises a linear series pass device.

12. The power supply of claim 11 wherein said linear series pass device comprises an n-channel transistor, said control means controlling operation of said linear series pass device such that the gate voltage thereof is greater than the drain voltage thereof.

13. The power supply of claim 10 wherein said switching converter means comprises at least one switching device, at least one switching device of said switching converter means comprising said linear regulator means, the gate drive voltage of said switching device being controlled to adjust the forward voltage drop across said switching device in order to regulate said output voltage.

14. The power supply of claim 10 wherein said resonant converter comprises a capacitor-multiplying, dual resonant forward converter, comprising:

an energy-storage capacitance Ce for coupling to said dc source voltage;

a series combination of a first switching device and a primary winding of a first transformer coupled in parallel with said energy-storage capacitance;

a series combination of a second switching device and a primary winding of a second transformer coupled in parallel with said energy-storage capacitance;

a secondary winding of said first transformer and a secondary winding of said second transformer each being coupled in parallel through separate respective rectifying means to an output filter capacitance Co; and

drive means for driving said first and second switching devices at a substantially 50% duty cycle and substantially 180° out-of-phase with respect to each other, said first and second transformers each having substantially the same turns ratio N;

whereby the equivalent output capacitance Ceo of said converter is given by the expression:

$$Ceo = N^2 Ce + Co.$$

15. The power supply of claim 14 wherein said linear regulator means comprises a linear series pass device.

16. The power supply of claim 15 wherein said converter further comprises an auxiliary winding on at least one of said transformers, the voltage induced across said auxiliary winding providing the gate drive power to said linear series pass device.

17. The power supply of claim 15 wherein said linear series pass device comprises an n-channel transistor, said control means controlling operation of said linear series pass device such that the gate voltage thereof is greater than the drain voltage thereof.

18. The power supply of claim 17 wherein said converter further comprises an auxiliary winding on at least one of said transformers, the voltage induced across said auxiliary winding providing the gate drive power to said linear series pass device.

19. The power supply of claim 14 wherein said first and second switching devices of said dual resonant forward converter comprise said linear regulator means, the gate drive voltage of said first and second switching devices being controlled to adjust the forward voltage drop across said first and second switching devices in order to regulate said output voltage.

FIG. 1

FIG. 2

TO Qa AND Qb GATE DRIVES

EP 0 550 167 A2

FIG. 3